# EUROPEAN PATENT APPLICATION

(11) **EP 2 875 749 A1**
(43) Date of publication of application: **27.05.2015**
(21) Application number: 14194467.8
(22) Date of filing: 24.11.2014
(51) Int. Cl.: A45C 13/38, B62B 1/12

(54) **Collapsible transportation trolley**

(30) Priority: 26.11.2013 IT MI20131967
(71) Applicant: Aloni, Vincenzo, 20123 Milano (IT); Gallo, Franco, 20095 Cusano Milanino (MI) (IT)
(72) Inventor: Aloni, Vincenzo, I-20123 Milano (IT)
(74) Representative: Di Bernardo, Antonio

(57) **Abstract**

The present invention concerns a compactable transportation trolley comprising a support frame comprising
- a first and a second extensible straight elements
- a base portion (9) coupled to two caster wheels
- a trailering or carrying element (10), connectable to said first and said second extensible straight element

said frame being articulated between a first extended configuration and a second compacted configuration, wherein in said extended configuration said frame is substantially presented in a triangular shape, said first and second extensible straight elements substantially being the sides of said triangle and said base portion (9) the basis of this triangle wherein said first and second extensible straight elements respectively comprise a first and a second group of collapsible tubular elements (1-8), in such a way to reduce the volume when in compacted configuration and being an end of said first and of said second extensible straight element articulated to said base portion and the opposite end coupled to said trailering or carrying element (10), said base portion (9) being an axle of fixed length which connects said caster wheels. The two extreme elements of said extensible straight elements coupled with said base portion (9) are articulated by hinge members to said base portion (9) in such a way to allow a rotation of at least one of those two elements on the plane of said base portion (9)

## Description

The present invention concerns a compactable trolley/device for transportation.

Many different types of trolleys/devices are known in the market, which, thanks to the presence of caster wheels, of handles and supports, have the function of containing and transporting objects or products, which users usually buy in shops and in supermarkets. Said devices are usually heavy and nor compactable; some models are partially compactable but maintain anyway a volume not to be entirely negligible and anyway not suitable to be placed, when compacted, for example, in a handbag or similar.

One example is described in the patent US 5303805 A (Hauser Stephen), April, 1994; other examples are described in GB 2221429, February, 7, 1990 and WO9305993, April, 1st, 1993; all devices there described are oriented to reduce the dimensions of compacting of trolleys carrying objects without obtaining a real reduction of the compacting, useful to reach the above mentioned purposes.

Everyone has in fact the need to organize purchases but also to extemporize others during the day: at the moment of transportation of same the user is, sometimes, in trouble because he has to face a charge bigger than expected and bigger for his forces, when, perhaps, he is already loaded and hindered by other bags or small bags.

In this case if user had at his disposal in his bag or in his hand bag, or into the trunk of his car an openable trolley but compactable, which occupied a minimal volume, this could be in general of help to him.

The device, in its case 23, eventually equipped with a strap, could also be simply brought at shoulder and this would allow a higher facility to carryout opening and closing operations later described.

Aim of this invention is to realize a device for transportation of goods compactable and openable more times and easily, light, with minimum volume occupied after compacting, more compacted than the existing ones.

According to the invention, the aim is reached when the transportation device of goods is made according to the first attached claim.

The general basic idea of this invention, is to make available a transportation device convertible between an open configuration (ready to use) and a compacted configuration (in rest position) which allows to use a bag associated to a frame (preferably a metal frame), composed by a plurality of tubular segments reversibly connected in an articulated way and along them, some cables or other elements can move to make the relative locking of said segments and then to stiffen the frame for the practical use.

These and other characteristics of the present invention will be more evident in the following detailed description of one example of practical construction and of two different alternative ways of execution, illustrated, as non-limiting example, in the attached drawings, where:
Fig. 1 shows a perspective view of an extended and operative transportation device according to present invention in open configuration for use
Fig. 2 shows a perspective view of a transportation device according to present invention in compacted configuration of minimum volume, inside its case, ready to be placed in a handbag for woman
Fig. 3 shows a front view of the compacted device with segments deposited on base axle 9
Fig. 4 shows a view according to direction X of Fig. 3, which shows two packs of segments, placed side-by-side, on two parallel planes and the trailering element 10 placed on them
Fig. 5 shows a partial front view of open device, with the final tringle shape, not yet stiffened, with little blocks B1-B6 in resting position
Fig. 6 shows a section VI-VI of Fig. 5 in correspondence of hinge C when the showed segments 1 and 5 are still distant, because they are placed on same parallel planes as they were when deposited on axle 9
Fig. 7 shows a partial front view of open device, with final triangular shape, stiffened, with hinges C1-C3 and C5-C7 in a position, which approximately corresponds to the midpoint of little blocks B1 - B6
Fig. 8 shows a section VIII - VIII of Fig. 7 in correspondence of hinge C when shown segments 1 and 5 are now laying on same plane
Fig. 9 shows a view according to direction Y of Fig. 7, of the open device, stiffened, with segments 1-8 laying on same plane
Fig. 10 shows a partial view of device in open configuration, triangularly shaped, in correspondence of hinge C, connected to segments 1 and 5, which are kept on same plane and locked by a small shaped plate 16.
Fig. 11 shows a front view of compacted device, without the bag, with segments deposited, in sequence from one to six, one on the other, on the axle 9, and related to a first alternative form of execution
Fig. 12 shows a view according to direction Z of Fig. 11 where you can see segments deposited one on the other and then on same plane; section XI - XI of Fig. 12 relates to Fig. 11
Fig. 13 shows a front view of a first position of opening cycle of device, according to the first alternative form of execution, when device is moving from the compacted configuration to the extended one
Fig. 14 shows a front view of a following position of the opening cycle of the device according to the first alternative form of execution, when device is moving from compacted configuration to the open one
Fig. 15 shows a front view of open device according to the first alternative form of execution, in final triangular
Fig. 16 shows a front view of compacted device, without the bag, related to a second alternative form of execution
Fig. 17 shows a view from Z1 of Fig. 16, of the compacted device, where you can see the trailering element 10 placed perpendicularly to axis of segments, related to the second alternative form of execution; section XVI - XVI of Fig. 17 relates to Fig. 16
Fig. 18 shows the front view of the first position of the opening cycle of the device related to the second alternative form of execution, when the device is moving from compacted configuration to open one; figure shows the isosceles triangle shape of minimum configuration
Fig. 19 shows a front view of device completely open and related to the second alternative form of execution
Fig. 20 shows section XX - XX of Fig. 16 where you can see the two external segments 4 and 8 placed over each other on the axle 9 and the bag 17 folded into the gap between the external guard and the U shaped sheet and above the segments itself, related to the second alternative form of execution
Fig. 21 shows a front view of the compacted device with segments deposited on axle 9 which has a rectangular opening in the bottom in order to allow a further lowering of the pack of elements, to the level of the contact plane of caster wheels with the ground and this is related to the first alternative form of execution
Fig. 22 shows a view from W of Fig. 21; section XXI - XXI of Fig. 22 relates to Fig. 21
Fig. 23 shows a section XXIII - XXIII of Fig. 21, where you can see the segments 1 - 6 deposited over each other on axle 9, you can see the pack of segments at the level of ground and the bag 17 folded in the gap between the external guard and the U shaped sheet and above them the segments itself, related to the first alternative form of execution.

In general, we can say that the compactable transportation trolley according to invention includes a supporting frame, which comprises:
- a first and a second extensible straight elements
- a base portion 9 coupled to two caster wheels
- a trailering or carrying element (10) connectable to said first and second extensible straight elements

The extensible straight elements are substantially collapsible bars (in the sense that their length can be modified): in this sense the frame is compactable, because is articulated between a first extended configuration and a second compacted configuration; in the extended configuration the frame appears substantially like a triangle shape wherein the sides are substantially formed by the first and the second extensible straight elements while the base portion 9 is the base of the triangle.

Going further into detail the first and the second extensible straight elements "include respectively" a first and a second group of collapsible tubular elements 1-8: with the phrase "include respectively" we mean that the first extensible straight element is practically composed of the first group of collapsible elements while the second extensible straight element is composed of the second group of collapsible elements. Those elements can collapse in such a way to reduce the volume of the compacted configuration: in the different executive forms here under described in detail, it will be clear that such a collapsing of elements occurs according to two different preferred modalities: or by folding the elements, thanks to hinge members made on purpose, or by realizing the elements in a telescopic mode.

In order to generate the foldable/compactable frame, one end both of the first and of the second extensible straight element is articulated to the base element while the opposite end is coupled to the trailering or carrying element 10 (in practice a handle means).

Advantageously, in order to strengthen the frame, the base portion is almost an axle 9 of fixed length that connects said caster wheels: this axle is not foldable and its length sets in practice one of the minimum dimensions that the frame can reach when in compacted configuration.

With the purpose to stiffen the frame and avoid distortions of the frame itself, the collapsible tubular elements are connected each other also through an anti-rotation device means useful to prevent a reciprocal axial rotation around the axis of longitudinal development of each element.

We underline since now that depending on situations, these anti-rotation devices can be the hinge members itself that guide the folding of elements, or, in the case elements are telescopically shaped, as described shortly, they include a suitable interference profile like a coupling shaped guide-slide or the like

In fact, in case the collapsing of extensible straight elements is obtained by folding of single elements, the adjacent elements 1-4, 5-8 of the first and of the second group are connected by a corresponding articulating hinge C1-C8: each hinge member is suitable to connect steadily two adjacent tubular elements of the same group (1-4; 5-9) to prevent a reciprocal axial rotation around the longitudinal axis of each element (1-8) and to guide at the same time, a reciprocal rotation of said two adjacent elements in a plane containing both the longitudinal development axis of the two elements: substantially the hinge member is a constraint with a freedom grade for rotation, being the rotational axis perpendicular to the developing longitudinal axis of each element.

The two extreme segments of said two extensible straight elements, coupled with the axle 9, are articulated with that axle in such a way to allow a rotation of at least one of the two segments on the plane of said axle 9: this particular will be clearer in the following detailed description.

In fact the elements of the first and of the second group, when moving from the compacted configuration to the extended one, respectively define a first and a second plane of articulation where the elements of the first and the elements of the second group respectively move, and where, during the movement from compacted configuration to extended one, said first and said second articulating plane are parallel and in said extended configuration said first and said second articulating plane are coincident on the same plane which contains the triangle and a common axis of rotation of caster wheels; this guarantees to get a compacted form of very reduced volume in order to be easily transported and located in a handbag or similar.

Advantageously, in the case the collapsing is obtained by the hinge members and by folding the elements, the frame also includes a locking system in correspondence of the position of articulating hinge members in order to prevent/release at least the reciprocal rotation of two adjacent elements: in a preferred form of execution this locking device includes, for each hinge member, a corresponding small block sliding in respect to elements and forecasted to move between an engaging position (where it is coupled with two tubular elements adjacent to said hinge member) and a non-engaging position (where it isn't engaged with said two tubular elements adjacent to the hinge member).

In the exemplifying form of execution which will be later described, the little blocks (B1 - B6) are located inwardly to the tubular elements and are joined one to other by a driving cable that the user can activate; the little blocks are further subjected to the force activated by a return spring 22 to take them into a steady engagement condition.

The above mentioned driving and connecting cable can be realized in rigid material, with eyelets at the ends to allow the folding operation of an element on the other during the phase of compacting the elements and can be activated by applying a push or a pull on its end when you want to stiffen the frame in the open configuration.

In an alternative form not described, the little blocks are externally positioned in respect to elements and are realized like sleeves that slide along them. In this case, the elements can be made with full material.

To complete the functionality of invention, the trolley includes also a bag and a seat for the bag, obtained into the base portion; in alternative the user could also think to utilize the frame, just described, like a simple compactable supporting trolley to transport common plastic shopping bags or similar which could simply be hanged, for example, in various way to the frame.

In a preferred form of execution, that will be also described later in detail, the axle 9 comprises a vertical wall which includes a U shaped sheet equipped with substantially parallel walls fitted with inclined slots F1, F2, being the end of one extensible straight element coupled with said axle 9 sliding in a guided mode along the slots F1, F2 and being the end of the other extensible straight element coupled to said axle 9 through hinge C3.

The transportation device of objects according to this invention comprises, in its general and common aspects to the various forms of execution, a frame built-up by tubular extensible straight elements, preferably made of metal, formed by a number of elements which can vary depending on the final dimension which we want to establish for the compacted device, respecting the height of device, when, extended, for an easy transportation by hand.

The tubular extensible straight elements and relevant elements can present in general a transversal circular section, square or rectangular.

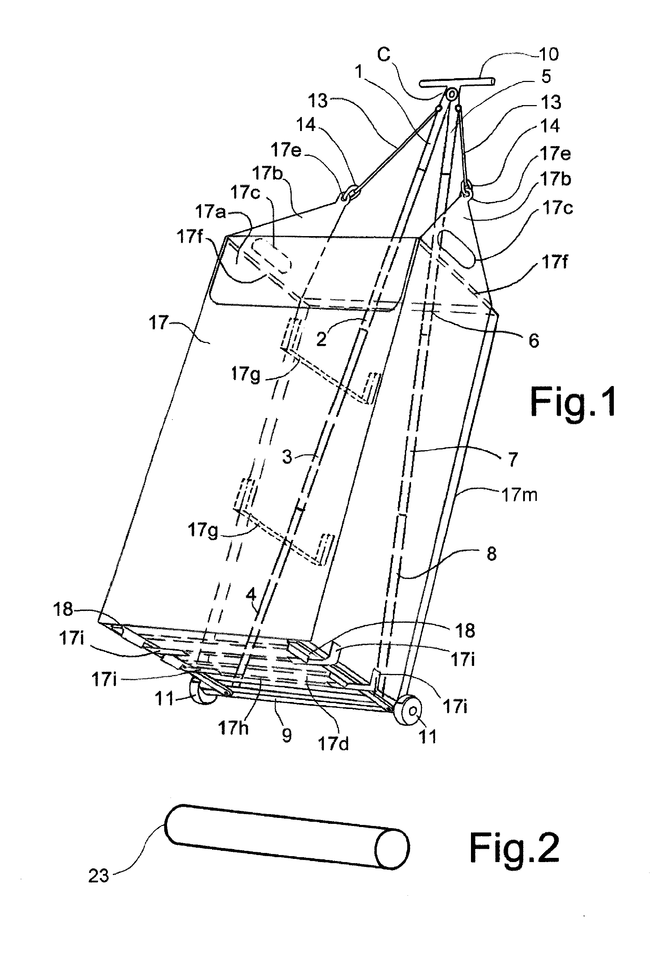

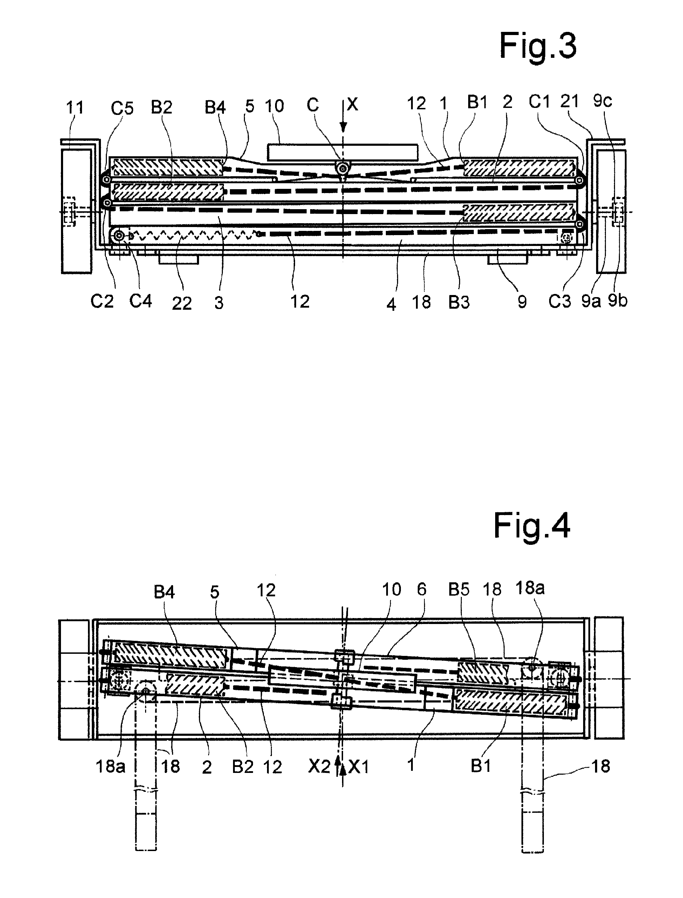

In the version represented in Fig. 1, the segments are numbered from 1 to 8, and besides them we add the superior trailering element 10, the axle 9 and the bag 17, made of fabric, connected and supported by the fabric straps 13 to hinge C; the bag 17 is fitted with a pocket 17m to contain the frame when is developed in triangular shape or is compacted and it's equipped with a bottom 17d which lays on supporting bars 18, extracted from the axle 9, as in Fig. 4, wherein they are hinged, and to which the bottom is fixed through auto-gripping tapes 17i, the first tape by hooks and the second tape by curls, both sewed to the fabric in order to overlap in the position of use and hooking up.

The element 10.visible in high in Fig. 1, constitutes the trailering element while the base portion 9 constitutes the axle, visible in Fig. 3 and 4, to whose ends are placed the caster wheels 11, preferably in plastic or rubber material, mounted on pivots 9a fixed for example through nuts 9b and washers 9c and protected preferably by a little guard 21 to avoid eventual slithering of the bag 17 on the wheels 11.

You can note since now as the shape of element 10 can vary depending on different needs, as it can be different from the one represented, as a non-limiting example, in the attached figures

The presence of wheels 11 obviously allows to easily trail the device on the ground.

The bag 17, made up with a few parts of fabric (or also synthetic sheets) sewed each other or anyway connected (for example thermowelded), has a geometrical shape preferably parallelepiped and is equipped, see Fig. 1, of a superior protection 17a like a cover and of two shaped fabric parts or similar 17b, sewed along the superior short sides of the parallelepiped, to whose ends, equipped with studs 17e, are connected, through two fasteners 14, the two extended fabric straps 13 which support the bag and which are hooked below the trailering element 10.

The two extended fabric straps 13, can be connected each other, easily unhookable from the frame and can be a safe handle for lifting up the device by the user, when the device, charged with goods, has to overcome an important obstacle. The openings 17c of the bag, shown in Fig. 1, can also be of help for this same purpose.

As already said the bag 17 is also equipped with a pocket 17m inside which the elements of the frame are located when frame is developed in triangular shape or is compacted; frame segments are protected when are into the pocket 17m.

The bottom of the bag 17d, which has to support the most part of the load, is realized in fabric that preferably incorporates a series of small flexible metallic bars 17h, whose ends lean on supporting elements 18, which can be opened thanks to two pivots with screw 18a which fix them to the axle 9 as shown in a few figures like Fig. 4, 9, 12 and 22. The bag can be advantageously fitted internally with fabric straps 17g to avoid deformation of the bag when it is particularly loaded.

The supports 18 can be advantageously inserted in a small shaped bar, like a shaped piece, steadily fixed to axle 9, close to rotation pivots, in order to resist to the bending load without transferring stresses to the rotation pivots, when they are in open position. This solution is not shown on drawings.

In order to strengthen the bag 17 and give a stable configuration either when bag is empty or is loaded, and in order to give a shape to the superior opening of bag to facilitate the product loading, some small metallic bars 17f can be inserted along the superior short sides and also eventually along the long sides.

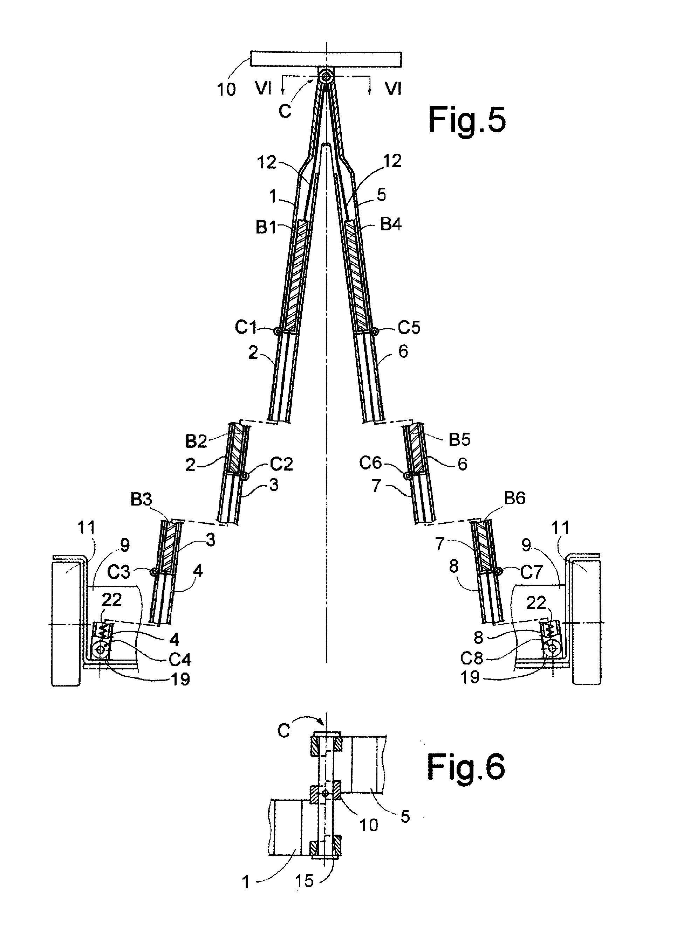

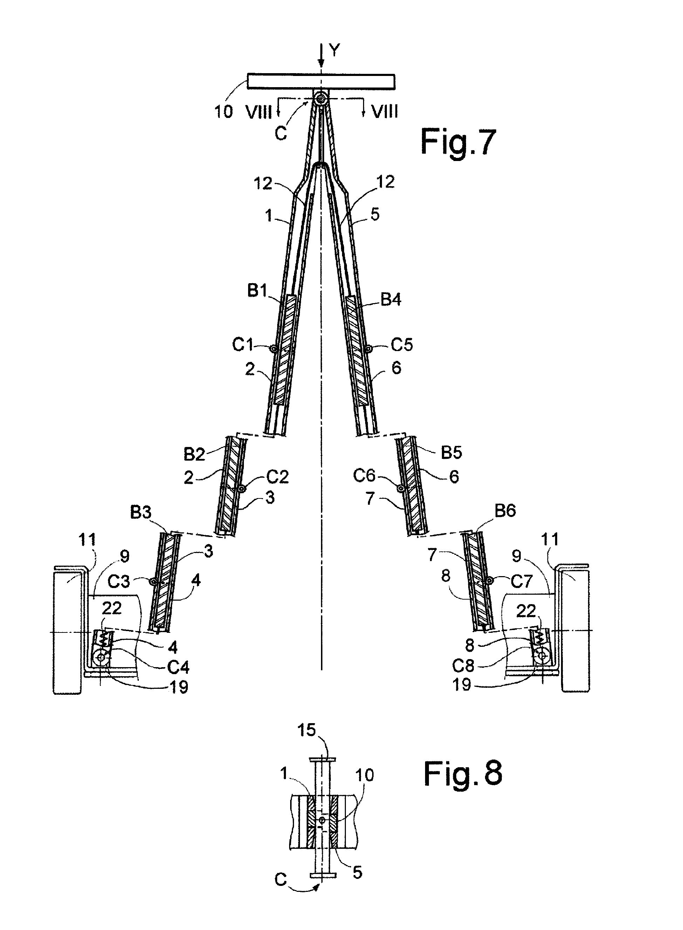

The frame of the device when is in extended configuration, as in Fig. 1, is formed by tubular segments 1-8, by the axle 9, and by the trailering element 10 besides the two caster wheels 11; the segments have a length proportioned to length that we want to give to the compacted device. Said length has anyway a value conditioned by the minimum length of the axle 9, which has to guarantee the stability during the transportation particularly also when running out differences in height of the ground. As already said the segments of the represented frame are 8, out of which the elements 1-4 and the elements 5-8 constitute the two inclined sides of the frame preferably triangularly shaped, at least if related to the shown solution, in addition to the axle 9 horizontally placed; we add to them the element (10), the trailering element which, when it is operative, is positioned on the superior part of the frame and is articulated to the two segments 1 and 5 through the pivot 15 which is visible in Fig. 6 and 8.

The represented frame has a triangular shape because, with same section of segments made preferably in aluminium, is such which allows a good rigidity and has the strength to support the product load that the user will put into the bag during purchasing phases, without suffering a significant deformation. Nevertheless, thanks to this triangular shape, the trailering element 10 has its seat between segments 1 and 5 (which have approximately a half-length of the other), in the assembly compacted on the axle 9, as these three segments are shaped on the purpose as shown in Fig. 3.

Segments 1-8 and the axle 9 are connected each other by hinge members or similar indicated by letter C followed by a number, in particular C1-C8, realized in a material adequately strong and they can be obtained, by suitable deformations and shaping of same material of segments itself.

Said hinges C1-C8 allow the relative movement between two connected segments, on the same plane.

The peculiarity of this frame is such that, when compacted, it lays down on the axle 9 with the segments positioned in two packs placed side by side, the first composed by segments 1, 2, 3, 4 and the second composed by segments 5, 6, 7 ,8.

Fig. 3 shows the pack of segments 1, 2, 3, 4 seen from one side, behind which you can find the second pack of segments 5, 6, 7, 8. The figure shows then by continuous line the segments and the visible hinges and by dotted line the cables 12 and small full blocks B1-B4 inwards to visible segments.

Looking Fig. 3 from X direction, you obtain Fig. 4 where you can see from high the compacted device and you can also see the second group of segments 5, 6, 7, 8 the element 10 and the pivot 15 which connects element 10 to the ends of segments 1 and 5, segments which are distant between them, because they belong to different and parallel planes.

Practically if we place ourselves along the two indicated directions in Fig. 4, X1 and X2 you can see, with the first, the Fig. 3 where the two packs of segments are one exactly behind the other, but inclined in respect to the axis of caster wheels 11, while if we place along the direction X1, the view is parallel to the caster wheels axis but we see the second pack of segments to appear behind the first pack because of the mentioned inclination.

When you lift up the element 10 to create the triangular shape and you get to the summit of the movement, the segments 1, 2, 3, 4 and the segments 5, 6, 7, 8 present themselves like shown in Fig. 5 and 6, aligned between them to form the two sides of the represented triangle but the two groups of segments are laying in two different and parallel planes. In those last two figures you can see the segments in section and relevant thickness indicated by simple dotted line while the little blocks B1-B6, which are inside them, are indicated in section by dotted double line while the cables 12 which connect them are indicated by full continuous line.

You can also see the hinge members and their positioning relative to two contiguous segments.

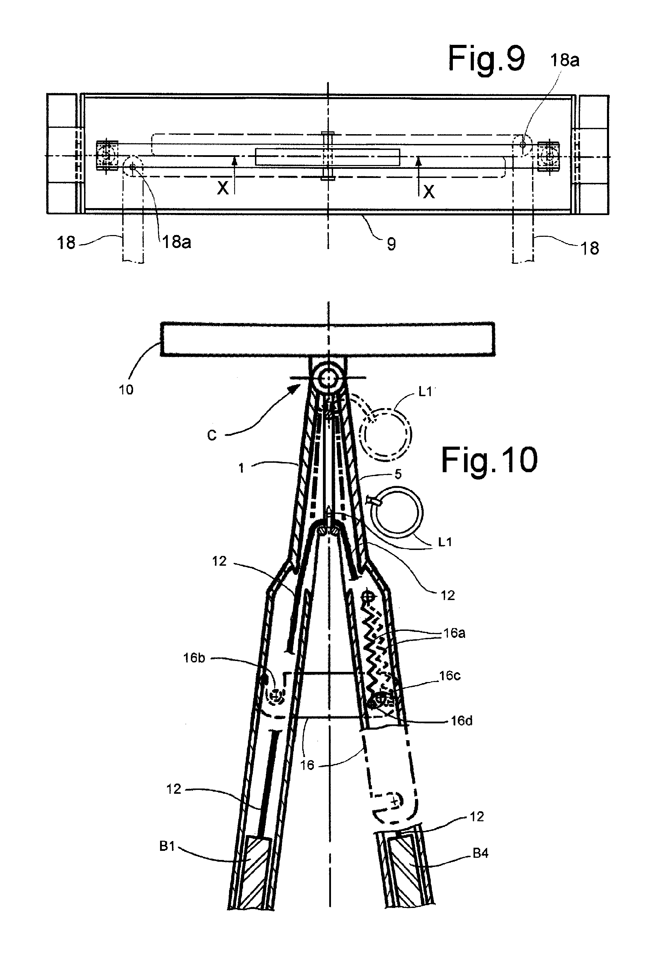

Now it is necessary to put the two groups of segments on the same plane and get close the ends of segments 1 and 5. In order to realize this movement you can act on all the two groups of segments 1-4 and 5-8 in order to make also the pivots 19 to rotate thus generating the alignment of all segments on one same plane without being obligated to exercise any forcing. In order to lock relatively the two segments 1 and 5, you can rotate the small plate 16, around its pivot 16c, from its position along segment 5 to the horizontal position, fixed by pivot 16b and the small plate is locked in this position thanks to tension generated by the spring 16a, as you can see in Fig. 10 which represents section X-X of Fig. 9. Also in this Fig. 10 you can see the segments in section and relevant thickness indicated by dotted simple line while internally the little blocks B1-B6, are indicated in section by dotted double line, while the cables 12, which connect them, are indicated by continuous line. Fig. 8 and 9 then show the hinge C ready to use as the ends of both segments 1 and 5 are pressed side-by-side along the pivot 15, thanks to little plate 16. Always in Fig. 10 you can see the position of the little ring L1, represented by continuous line, related to the position where the little blocks B1-B6 are in engaging position, as shown, and the position of same little ring L1, represented by dotted line, related to the non-engaging position of little blocks.

In order to have the device completely stiffened, at this moment you have to make the frame steady and you have to avoid the hinged segments to bend or to lose their alignment. By keeping in high the element 10 and by locking the axle 9 to the ground with a foot point, you unhook the little lever (or little ring) L1 from hinge C, see detail in Fig. 7 and 10, and the assembly of little blocks B1-B6 together with the cables 12 go down to the suitable inferior stand because the ends of cables 12 are pulled by the spring 22, visible in Fig. 3, 5, 7, 11 and 14, which is fixed internally to the ends of segments 4 and 8, spring which is always in tension both when small lever (or small ring) L1 is hooked in C and when it is lowered and then always pulls towards its fixed point at the end of segments 4 and 8.

In this way the two parts of the cable 12 together with the little blocks B1-B6 (B1, B2, B3 fixed in series to the first part of the cable 12 and B4, B5, B6, fixed in series to the second part of cable 12 distanced as much as the length of segments) slide and make the little blocks to position between two contiguous segments, in correspondence of each hinge or similar C1-C3 and C5-C7, in this way stiffening the frame, as in Fig. 7.

In particular when little block B1 is located internally or externally, but between segments 1 and 2, when the little block B2 is between segments 2 and 3 and so on, when all other 4 little blocks B3-B6 are in correspondence of hinge members of other contiguous segments, the segments cannot move relatively and frame is steady.

By making the operation to extend the frame, the bag 17, anchored in proximity of the trailering element 10 through the extended straps 13, is consequently lifted up from its seat on the axle 9, and it is extended, by keeping the frame inside of the pocket 17m. You can open the two stands 18 visible in Fig. 4, 9 and 12 and the completed device is self-supported by the caster wheels and by the two stands 18. You can fix the bag bottom 17d to stands 18 through the auto gripping tapes 17i, the first tape by hooks, the second tape by curls both sewed to the fabric in order to overlap in utilisation and hooking position and the device is ready to use as shown in Fig. 1.

Likewise, the device, when bag is empty, can be compacted following the opposite procedure. The user, after having laid the open device on the ground, on caster wheels and on stands 18 and having got the bag 17 empty from products, releases the bottom 17d of the bag 17 from straps 17i and from stands 18, makes the small plate 16 to rotate in rest position along the segment 5, moves the ends of segments 1 and 5 on two planes and then distances them, and consequently pivots 19 rotate with all segments, thus positioning on two parallel planes, lifts up the small lever (or the little ring) L1 by fastening the two parts of the cable 12 below the element 10, and consequently pulling further the springs 22, recalling the little blocks B1-B6 to exit above the hinges and then releasing the joints of segments. In this way, segments can fold over each other, and keeping by hand the trailering element 10, the user deposits the frame on axle 9, going back to the compacted device shown in Fig. 3. As an alternative to springs 22, the two parts of the cable 12 could have at their ends another small lever (or little ring) and these ones, if released, or contemporarily pulled, act on the cable 12 and then act on little blocks B1-B6, releasing or locking the joints of segments. This situation is not shown on drawings.

By proceeding in the compacting phase, by keeping the trailering element 10 in hand, all segments fold over each other along two planes and particularly making that segments 1, 2, 3, 4 fold over each other and also segments 5, 6, 7, 8 fold over each other on axle 9. The bag 17 is folded on itself and by using the hand, is deposited in its suitable seat on axle 9 and stands 18 are rotated and aligned to axle 9, the device is compacted and can be introduced into its case 23 and then in a woman handbag or in a man hand bag or similar.

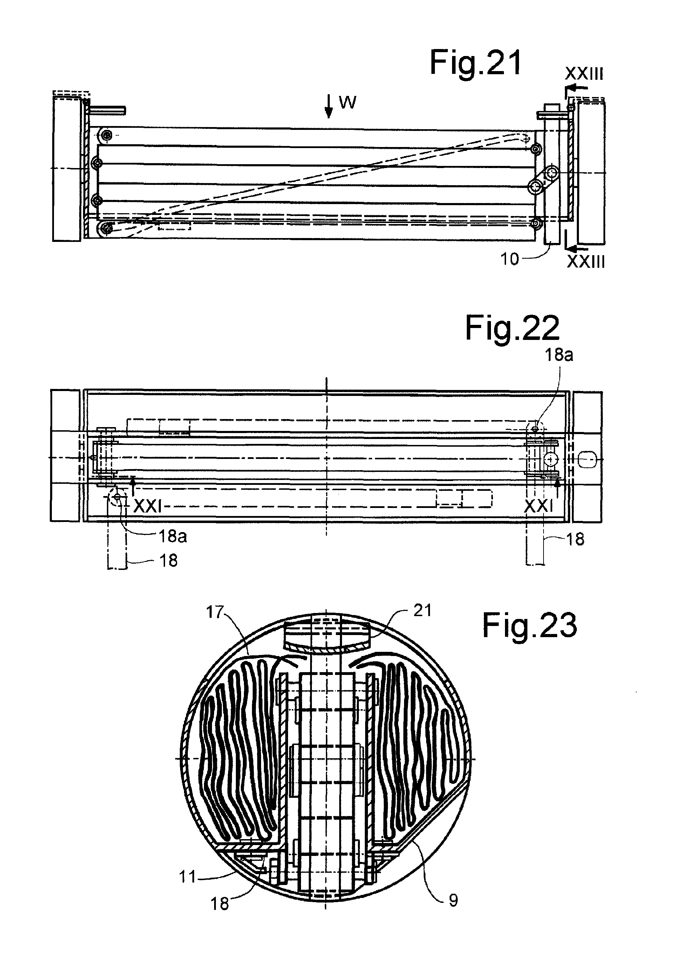

As you can see the axle 9 is a very important piece of the device because, besides it is the more robust piece to support the load, the segments are compacted on it and inside of its shape, the bag finds its seat. Respecting the purpose which is to compact all as much as possible, we have represented in Fig. 21, 22 and 23, the possibility that the axle can be fitted with a rectangular opening on its base plane and through it the inferior part of the block of segments can pass and lay down, when block is completely compacted, at the lowest level in correspondence to the level of caster wheels and stop there. The pack of elements then occupies a volume same or even lower of the one, which corresponds to caster wheels diameter. In Fig. 23, you can also see the particular shape of the guard containing the bag 17 and its inclined plane forecasted to keep the distance of the axle from the ground during the movement of trailering of the device, normally in inclined position. The mentioned guard can be fitted with a curve sliding covering with which you can enclose the complete assembly deposited on the axle 9 in a cylinder of reduced dimensions, with caster wheels 11 at its ends. This solution is not shown in the Figures.

In Fig. 21 and 23, you can also see two little protection guards 21 to avoid slithering of the bag against the wheels 11, in reversed position, toward the internal part of wheels, always with the aim to occupy the smallest volume of compacted.

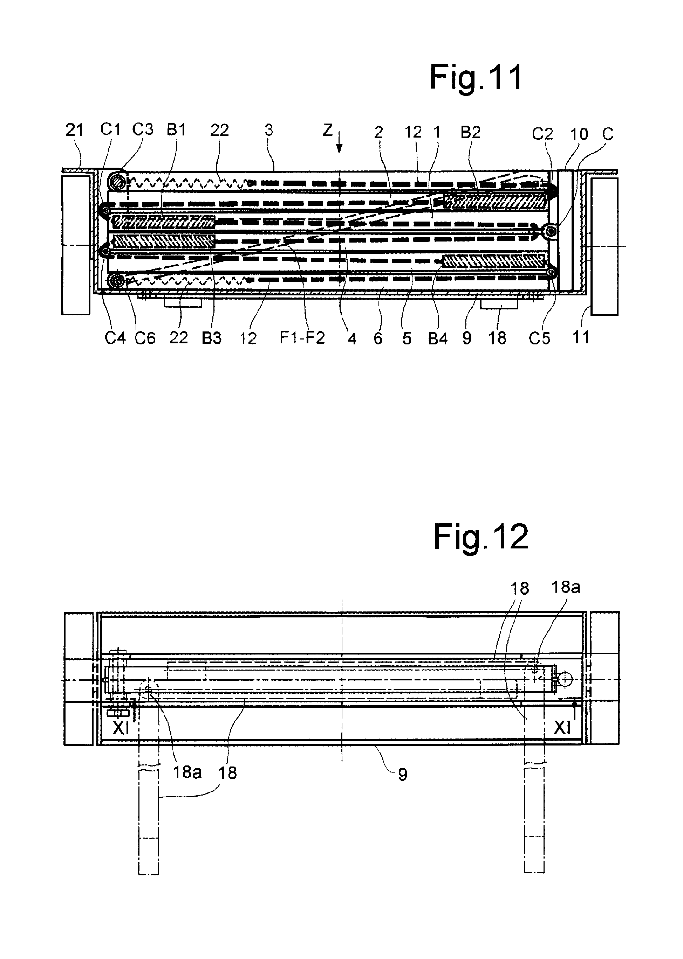

To give an example we have represented this possibility related to the first alternative form of execution. For this solution and for the first alternative form of execution, about which we will talk later, we can reach a further compacting by realizing the hinges C1-C3, C5-C7, and C1-C2, C4-C5 in a particular way and preferably by placing them externally on two sides of segments, in order to allow the contact of surfaces of all segments, when folded over each other, without leaving any room, room which is instead visible in Fig. 3 and 11. After all it is important that when frame is extended, there is room enough below the axle 9 to allow an easy trailering of device on the ground, with stands 18 open, while, when device is compacted, the segments can also occupy the lowest parts of axle giving space to the bag, without generating any problem. This constructive solution is a characteristic both of the above-described device and of the device that we find slightly modified both in the first and in the second alternative form of execution, later described in a more detailed way.

The above described operation is valid when the loaded device is taken back home filled up and there got empty and compacted as described before.

The procedure is different when the device has been extracted from the car and to the car, the user is back after his shopping.

In this case the total disassembly and the compacting haven't any practical sense as it is supposed that, when user is back home, he parked the car either in the vicinity of home or at the destination place or in a box or in a garage. This makes us to think that the user has still to run a way to get to his home, way along which the device can be still usefully utilized.

Therefore when the user is back to his parked car, he can unhook the bag from the frame, by releasing the auto gripping tapes 17i and the extended straps 13, lift up the loaded bag to release it from the frame by extracting it from the pocket 17m in such a way to place the loaded bag into the car by keeping in this way the vertical position, and separately places the not-disassembled frame into the car trunk because the frame, due to the dimensions, can be placed without problems even in an economy car trunk.

At the end of the car path, the user can re-assemble the device by placing the bag 17 on the frame, kept in vertical position, makes the frame to slide internally to pocket 17m, secures tapes 17i and the fasteners 14 in the studs 17e, and heads for the destination by trailering the loaded device.

The above-described frame, guarantees steadiness, lightness and a small volume occupied.

Likewise, the device is easily and rapidly extended and compactable by following the very simple procedure.

The device according to present invention has a flexible frame allowing useful and important angle variations between the vertical plane of the frame and the horizontal plane constituted by same stands and by the bag bottom, bound to them, by lessening the peaks of stresses generated by the load during the phases of passage from rest position to movement.

This angular variation distributes the involved stresses among the vertical elements and the horizontal ones of the frame allowing, even with its lightness, all necessary and possible movements, even with full loaded bag, which would require instead more robust frames, which could not match in any case the aim of compacting, and dimensions reduction we wanted to reach.

A peculiarity of the device is related to the its standing, when bag is full of goods and when the user has the need to temporarily abandon the device.

By taking as reference the existing trolley on the market, the device according to the present invention, does not have a strong metallic piece that operates as support besides the caster wheels, but only the flexible standing elements 18.

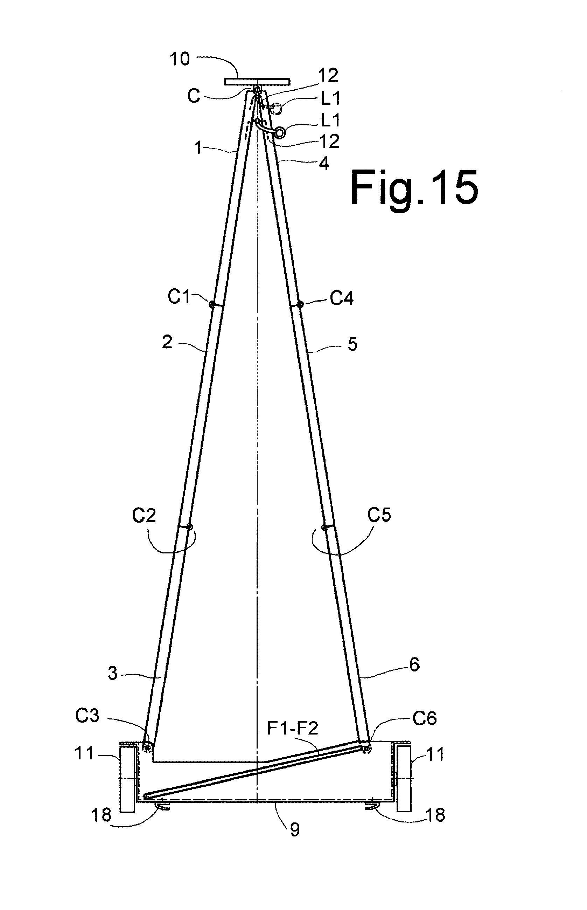

The bag lays with its bottom 17d on the standing elements 18 and stays distant from the ground thanks to the particular shape of elements itself, visible in Fig. 15, 19, 20 and 23. When resting the device remains in an almost vertical position.

To move when bag is loaded, it's enough to incline the frame towards the user acting on the trailering element 10, eventually creating a resistance with the foot leant on the axle 9, just to give the proper inclination for trailering.

As you can notice, the assembly of the device makes evident the simplicity of the frame and its manageability, but also the fact that the weight of the content is taken as advantage to tension the bag and give stability.

The stability of the device has a correspondence even when it has to overcome, during the carrying, small obstacles or grades or other difficulties of the path, thanks to its standing elements 18 and thanks to the fact that the extended straps 13, almost inextensible and hooked below the trailering element 10, bear part of the weight also when it's required to apply not so moderate pulling efforts for carrying.

All parts could be substituted by other elements technically equivalent and the employed materials, the dimensions, the shapes and quantities of components could be varied according to needs.

The device designed in this way is susceptible of other implementations or modifications all belonging to the boundary of the inventive concept apart from the alternatives already described into the text.

Here below two additional alternatives forms of execution will be shortly described (variations) all attributable to the general inventive concept just described.

### FIRST ALTERNATIVE FORM OF EXECUTION

There is the possibility to build up the frame according to the same previously described characteristics but in such a way to make all segments belonging to one same plane both when you lift up the frame and when you deposit it on the axle 9 and the procedure of composition of the device is getting simpler and consequently its compacting. In this case, the number of segments must be compatible with the practical possibility of moving the segments itself in order to realize the frame and to compact it. In the represented solution, the preferred number of segments is 6 (six).

In this alternative the axle 9 is U shaped equipped with two slots F1 and F2, inclined and parallel, one for each vertical plane of the U shaped piece, as shown in Fig. 11, inside which the pivot of hinge C6, in practice the end of the last segment 6, can slide during movements of composition and compacting of the device.

Fig. 11 is the section XI-XI of Fig. 12 and then it presents the segments in sight by continuous line, the little blocks inside the segments by dotted line and cables 12, as well inside the segments, by dotted line. You can notice the springs 22 represented as well in dotted line and they are always in tension.

Substantially all segments 1-6 and the axle 9, remain connected by hinges C, C1-C6 out of which hinge C is fixed between the segments 1 and 4 to the trailering element 10, C3 is fixed between the segment 3 and the axle 9, while the hinge C6 identifies with the end of segment 6 and slides along the two slots F1 and F2 both when you open the structure or when you compact it.

This type of configuration allows that, during compacting, all segments 1-6 fold over each other and all of them on the axle 9, on the same vertical plane and not in two groups on two planes as in the basic alternative, because the segment 6 has his end sliding along the slots F1 and F2 and, during the compacting, is going to lay horizontally on the axle 9 and its end C6 goes to take a position vertically right below hinges C1, C3, C4 and hinge C5 vertically right below the hinges C and C2, as shown in Fig. 11.

In this case the trailering element 10 is going to lay aside of the pack of segments, vertically, not horizontally, positioned in respect to the axle 9.

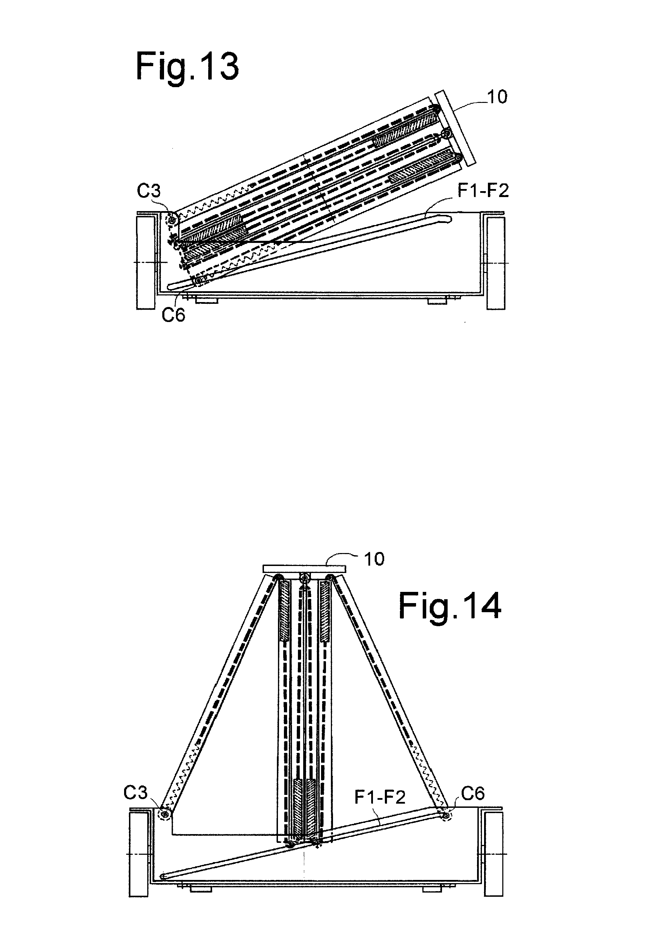

Likewise when you want to extend the frame, you take element 10, you lift it up as shown in Fig. 13; in this moment hinge C6 starts sliding along the slots F1-F2.

By proceeding in the movement and guiding the movement of hinge C6 in the slots, you reach the vertical position shown in figure 14, position that can be fixed by locking wing nut 20 in C6.

At this point in order to complete the operation you have to place the axle on the ground, by keeping it stopped by a foot and lifting the element 10 in order to completely open the pack of segments and further forming the triangular shape already described as visible in Fig. 15.

Then you lock the frame with little blocks B1-B4 as already said.

In this way, you it is not requested to forecast to use pivots 19 to align the two groups of segments and to use small plate 16, because the segments 1 and 5 are already steadily hinged in C, on pivot 15, with the trailering element 10. All the rest remains substantially the same as described for the basic alternative.

The slots F1 and F2, also present in the second alternative form of execution about which we will be talking later, can be eliminated if the movement of the mobile hinge, C6 in this case, is manually operated by moving the pivot equipped with wing-nut right below hinge C4, without making any sliding, and by making the pivot of hinge to position into the foreseen suitable cavity. This solution is not represented in figures. As it's shown in Fig. 11, 13, 14, 15, 16, 18 and 19 the slots F1 and F2 present advantageously at the ends where the mobile hinge is fixed, a deviation in respect to their axis, useful to guarantee the stability of the fixing point itself in all conditions of use.

### SECOND ALTERNATIVE FORM OF EXECUTION

This alternative descends both from the basic solution and from the first alternative form of execution with one evolution in the embodiment of segments, which in the selected depiction are still in number of eight.

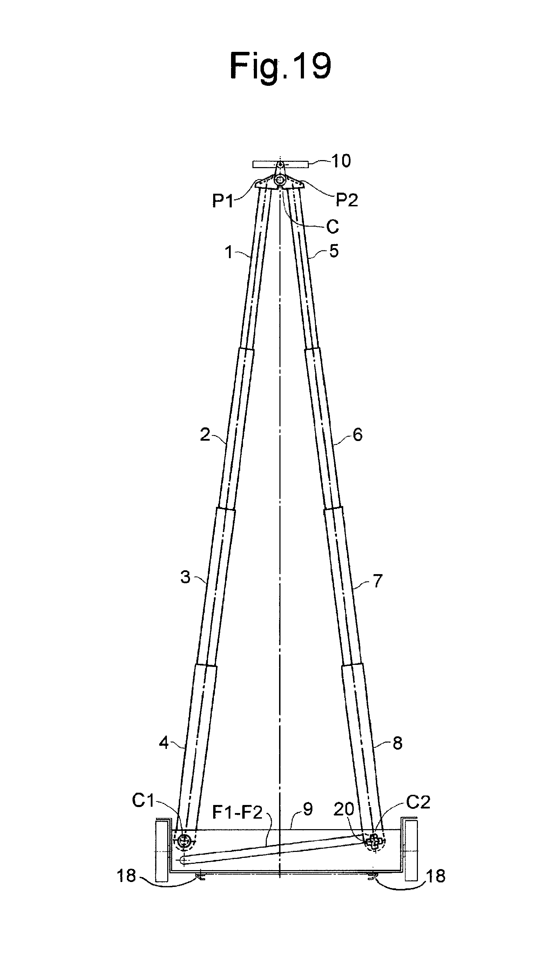

In this case you always get the triangular shape already described, in which however segments 1-4 are sliding telescopically one into the other (segments 1, 2, 3 slide inside segment 4) and segments 5-8 do the same (segments 5, 6, 7 slide into segment 8); while the segment 4 remains hinged on the axle 9 in C1 in a fixed way and the segment 1 remains hinged, in C, with the trailering element 10 and with the segment 5, as shown in Fig. 19.

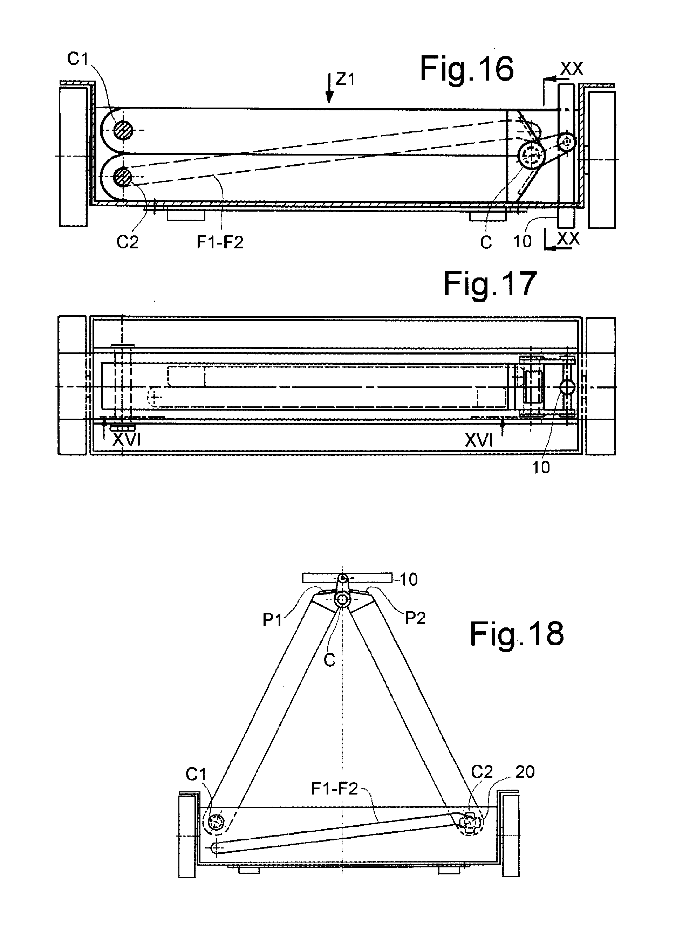

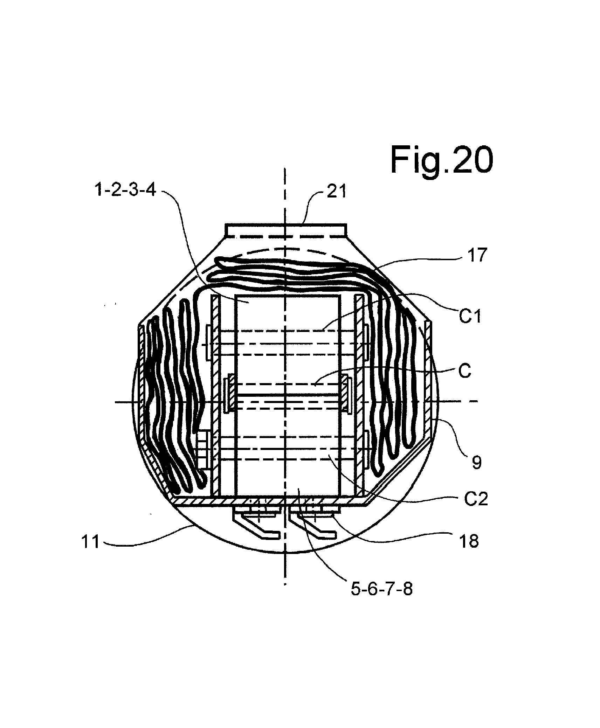

The axle 9 is U shaped, as in the first alternative form of execution and, as shown in Fig. 20, the end of the last segment 8, i.e. the hinge C2, slides along the two slots F1 and F2 as shown in Fig. 18 and 19.

Fig. 20, which is a section XX-XX of Fig. 16, also shows the position of the bag when the device is compacted; it is deposited outside the U shape of axle 9, on top to the segments and laterally and internally to the external guard, always included within the profile of caster wheels 11. The stands 18, which are common to all alternatives, are also visible in this Figure.

Therefore, substantially the second alternative form of execution is inspired to the first alternative form of execution, because the compacted frame foresees that the segment 4, which contains the segments 1-3, deposits on the segment 8, which contains the segments 5-7, thanks to the fact that hinge C2 has slid along the slots F1 and F2 towards the hinge C1, as you can see in Fig. 16.

The trailering element has a rounded and elongated shape and deposits, when device is compacted, on the head of segments 4 and 8, then perpendicularly in respect to the axis of caster wheels 11, as in Fig. 16 and 17.

In particular in Fig. 16 which is a section XVI-XVI of Fig. 17, you can see in dotted line, the slot F1 beyond the segments 4 and 8 in first sight and you can see the shape of the trailering element 10 which is disposed perpendicularly to the axis of caster wheels and is connected to hinge C through a small connecting rod which allows it to have the maximum length compatible with the diameter of caster wheels and to remain in the centre of the device during use.

Fig. 17 completes the picture and shows, with the sight Z1 of Fig. 16, the two overlapped segments and the element 10.

In the opening phase, you pull the element 10, which moves on its plane and places itself in horizontal position at the end of the first opening operation as show in Fig. 18, wherein the frame takes an isosceles triangular shape with sides having length same as segments 4 and 8.

Hinge C2 has moved from position below C1 to the extreme one allowed by slots F1 and F2 and is locked there through wing nut 20. You can further lift up the element 10 which trails the segments which telescopically slide one into the other creating a variable triangular shape that locks, by the twitch of small springy pivots, when you release the two command switches P1 and P2, at the moment in which the frame reaches its maximum extension, as in Fig. 19.

The system of switches and small pivots can be similar to those commonly used in the market.

Nevertheless in Fig. 16 slots F1 and F2 are inclined in respect to the caster wheels axis, in an alternative form of execution, slots F1 and F2 can be parallel to the wheels axis. In this way, the objectives above evidenced are achieved.

## Claims

1. Compactable transportation trolley comprising a support frame comprising
- a first and a second extensible straight elements
- a base portion (9) coupled with two of caster wheels
- a trailering or carrying element (10), connectable to said first and said second extensible straight element
wherein said frame is articulable from a first extended configuration to a second compacted configuration, wherein in said extended configuration said frame is substantially configured as a triangle, said first and second extensible straight elements substantially forming the sides of said triangle and said base portion (9) the basis of this triangle
wherein said first and second extensible straight elements respectively comprise a first and a second group of collapsible tubular elements (1-8), in such a way to reduce the volume in compacted configuration and being one end of said first and of said second extensible straight element articulated to said base portion and the opposite end coupled to said trailering or carrying element (10),
**characterized by** the fact that said base portion (9) is an axle of fixed length which connects said caster wheels and the two extreme elements of said two straight elements coupled with said axle (9) are articulated through hinge members with said axle (9) in order to allow a rotation of at least one out of two straight elements, on the plane of said axle (9)

2. Transportation trolley according to claim 1, wherein said collapsible tubular elements (1-8) are connected each other also through an anti-rotation device appropriate to prevent a reciprocal axial rotation around the longitudinal axis of each element (1-8)

3. Transportation trolley according to claim 1 or 2, wherein the adjacent elements (1-4; 5-8) of said first and of said second group are connected by a corresponding articulating hinge (C1-C8), appropriate to permanently connect two adjacent tubular elements of same group (1-4; 5-8) and to drive a reciprocal rotation of said two adjacent elements in a plane containing both the developing longitudinal axes of said two elements in order to make said first and said second extensible straight elements collapsible.

4. Transportation trolley according to claim 1 or 2, wherein adjacent elements (1-4; 5-8) of said first and of said second group are telescopically inserted one in other, in order to obtain said first and said second straight elements collapsible, said anti-rotation device comprising an interference profile like a coupling shaped guide-slide or the like.

5. Transportation trolley according to one or more of previous claims also comprising a locking device in the position of said articulated hinge members in order to prevent/allow at least the reciprocal rotation and/or sliding between two adjacent elements.

6. Transportation trolley according to one or more of previous claims wherein said locking device in the position of said articulating hinge members, comprises for each hinge member a corresponding small block (B1-B6; B1-B4) sliding along said elements (1-8;1-6) designed for moving from an engaging condition where is coupled with two adjacent tubular elements to said hinge member and a non-engaging condition where is not coupled with said two tubular elements adjacent to said hinge member.

7. Transportation trolley according to claim 6 wherein said sliding small blocks (B1-B6) are located inside to said tubular elements and are connected by a driving cable that the user can activate and wherein at least one return spring (22) is preferably included acting on said small blocks (B1-B6) through the cable, to take them steadily in said engaging condition.

8. Transportation trolley according to one or more of previous claims, wherein said elements of the first and of the second group, during the movement between the compacted configuration and the extended one respectively define a first and a second articulating plane wherein elements of the first and of the second group respectively move, and wherein, during the movement from compacted configuration to extended one, said first and said second articulating planes are parallel and in said extended configuration said first and said second articulating planes are coincident on the same plane which contains the triangle and a common rotation axis of caster wheels.

9. Transportation trolley according to one or more of previous claims wherein the elements of the first and of the second group in compacted configuration, are arranged alternatively folded and parallel, that is the elements of the first group are deposited on a plane substantially parallel to the plane of second group elements, or substantially all items aligned on said axle (9).

10. Transportation trolley according to one or more of previous claims wherein said axle (9) comprises a vertical wall comprising a U shaped sheet fitted with substantially parallel walls fitted of corresponding slots (F1-F2) inclined as to wheels axis, being the end (C2, C6) of one straight element coupled to said axle (9) and sliding in a guided way along said slots (F1-F2) and being the end of the other straight element coupled to said axle (9) through an hinge member in fixed position (C1, C3)

11. Transportation trolley according to any of claims from 1 to 9, wherein said axle (9) comprises a vertical wall comprising a U shaped sheet equipped with two substantially parallel walls fitted with corresponding slots (F1, F2) parallel to wheels axis, being the end (C2, C6) of one elongated straight element coupled to said axle (9) sliding in a guided way along said slots (F1, F2) and being the end of the other elongated straight element coupled to said axle (9) by an hinge member in fixed position (C1, C3).

12. Transportation trolley according to one or more of previous claims also comprising a bag (17) and a relevant seat for said bag, said seat being obtained in said axle (9)

13. Transportation trolley according to claim 12, wherein the bag (17) comprises a pocket (17m) to contain the collapsible tubular elements (1-8) of the frame when this is developing in triangular shape or is compacted, in such a way to protect said tubular elements (1-8) and wherein preferably the bottom of the bag (17d) incorporates a series of small flexible metallic bars (17h).

14. Transportation trolley according to one or more of previous claims including at least one flexible bar hinged to axle (9) right below the plane of bag standing which moves on a plane perpendicular to the plane of the triangular frame, wherein said trolley preferably also comprises at least a fastening member by means of auto gripping tape of the one or more flexible bars placed below the standing plane of the bag bottom.
